Europäisches Patentamt

European Patent Office

Office européen des brevets

(11) Publication number: **0 107 982 B1**

# EUROPEAN PATENT SPECIFICATION

(45) Date of publication of patent specification: **18.03.92**    (51) Int. Cl.⁵: **G11B 5/39**

(21) Application number: **83306602.0**

(22) Date of filing: **28.10.83**

(54) **Magnetic transducer heads utilising magnetoresistance effect.**

(30) Priority: **29.10.82 JP 190181/82**
**29.10.82 JP 190182/82**
**29.10.82 JP 190186/82**

(43) Date of publication of application:
**09.05.84 Bulletin 84/19**

(45) Publication of the grant of the patent:
**18.03.92 Bulletin 92/12**

(84) Designated Contracting States:
**DE FR GB NL**

(56) References cited:
**EP-A- 0 012 325**      **EP-A- 0 021 392**
**EP-A- 0 041 133**      **JP-A-58 182 125**
**US-A- 3 731 007**      **US-A- 4 065 797**
**US-A- 4 068 272**      **US-A- 4 306 215**
**US-A- 4 356 523**

**IBM TECHNICAL DISCLOSURE BULLETIN, volume 17, no. 9, February 1975, page 2549 New York (US) J.A. Barkley et al.: "Thin-film transducer protection"**

**SOVJET INVENTIONS ILLUSTRATED, Week D33, September 23, 1981 Derwent Publications Ltd. LONDON (GB)**

(73) Proprietor: **SONY CORPORATION**
**7-35 Kitashinagawa 6-Chome Shinagawa-ku Tokyo 141(JP)**

(72) Inventor: **Souda, Yutaka**
**c/o Sony Corporation 7-35 Kitashinagawa 6-chome**
**Shinagawa-ku Tokyo(JP)**
Inventor: **Imakoshi, Shigeyoshi**
**c/o Sony Corporation 7-35 Kitashinagawa 6-chome**
**Shinagawa-ku Tokyo(JP)**
Inventor: **Suyama, Hideo**
**c/o Sony Corporation 7-35 Kitashinagawa 6-chome**
**Shinagawa-ku Tokyo(JP)**
Inventor: **Uchida, Hiroyuki**
**c/o Sony Corporation 7-35 Kitashinagawa 6-chome**
**Shinagawa-ku Tokyo(JP)**
Inventor: **Iida, Yasuhiro**
**c/o Sony Corporation 7-35 Kitashinagawa 6-chome**
**Shinagawa-ku Tokyo(JP)**
Inventor: **Sekiya, Tetsuo**
**c/o Sony Corporation 7-35 Kitashinagawa 6-chome**
**Shinagawa-ku Tokyo(JP)**

PATENTS ABSTRACTS OF JAPAN, volume 1, no. 135, page 6258E77 November 9, 1977, JP - A - 5269 673

PATENT ABSTRACTS OF JAPAN, volume 6, no. 195 (P-146) (1073) October 5, 1982 J - A - 57 105 821

PATENT ABSTRACTS OF JAPAN, volume 6, no. 125 (P-127) (1003) July 10, 1982 JP - A -57 50 318

PATENT ABSTRACT OF JAPAN, volume 1, no. 110, page 3945E77, September 26, 1977 JP - A - 52 42 712

PATENT ABSTRACTS OF JAPAN, vol. 1, no. 38, April 19, 1977, page 2271E76 & JP-A-51135627

IBM TECHNICAL DISCLOSURE BULLETIN, vol. 21, no. 8. January 1979, page 3341, NEW YORK 8US) K.H. ELSER et al.: "Magnetoresitive head assembly"

(74) Representative: **Cotter, Ivan John et al**
**D. YOUNG & CO. 10 Staple Inn**
**London WC1V 7RD(GB)**

## Description

This invention relates to magnetic transducer heads utilising magnetoresistance effect.

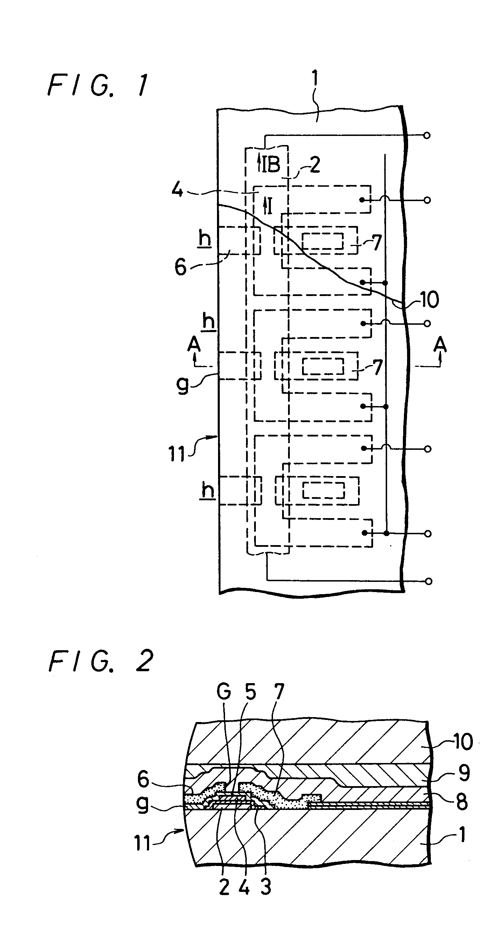

An example of a conventional magnetoresistance (hereinafter abbreviated to "MR") effect type magnetic reproducing transducer head, in particular a so-called rear type magnetic transducer head in which an MR element thereof is placed at a position rearward of a contact surface of the head with a magnetic recording medium, is shown in Figures 1 and 2 of the accompanying drawings. Figure 1 is a schematical enlarged plan view of a main part of the transducer head and Figure 2 is a schematically enlarged cross-sectional view taken along a line A-A in Figure 1. As shown in Figures 1 and 2, an insulating magnetic substrate 1 made of, for example, ferrite containing Ni-Zn has deposited therein a band-shaped conductor film or layer 2 which constitutes a current path acting as a bias magnetic field generating means for applying a bias magnetic field to an MR element 4 by electromagnetic induction or the like. The MR effect element 4 is a thin film MR effect element 4 made of, for example, alloy containing Ni-Fe or Ni-Co or the like and is deposited on the band-shaped conductor film 2 with an insulating layer 3 disposed between the film 2 and element 4. A pair of magnetic layers 6 and 7 made of alloy containing Ni-Fe or the like are deposited on the MR effect element 4, an insulating layer 5 being disposed between the element 4 and the layers 6 and 7. The magnetic layers 6 and 7 extend in a direction across the MR effect element 4 and are in face to face opposition on the MR effect element 4 so that a predetermined spacing $G$ is maintained between them. An outer end portion of the magnetic layer 6 opposes the substrate 1 through at least one of the insulating layers 3 and 5, thus forming a magnetic gap $g$, while an outer end portion of the magnetic layer 7 contacts the substrate 1 through windows formed through the insulating layers 3 and 5. The conductor film 2, the MR effect element 4 and the magnetic layers 6 and 7 are coated with a non-magnetic protective layer 8 on which a protective substrate 10 is bonded by means of an adhesive layer 9. A contact surface 11 for contact with a magnetic recording medium is formed over both the substrates 1 and 10. The magnetic gap $g$ faces the contact surface 11. A magnetic path or circuit which includes the magnetic gap $g$ and the MR effect element 4, namely a magnetic path formed by the magnetic substrate 1 - the magnetic gap $g$ - the magnetic layer 6 - the MR effect element 4 - the magnetic layer 7 - the magnetic substrate 1, is thus formed.

With the above configuration, when a predetermined bias magnetic field generated by causing a current $I_B$ to flow through the conductor layer 2 is applied to the MR effect element 4, and a current $I$ is caused to flow through the MR effect element 4, an electrical signal, namely an output signal due to resistance change in the MR effect element 4 caused by applying a magnetic flux from a magnetic signal recorded on a magnetic recording medium which is in contact with or opposed to the magnetic gap $g$, is produced between the ends of the MR effect element 4.

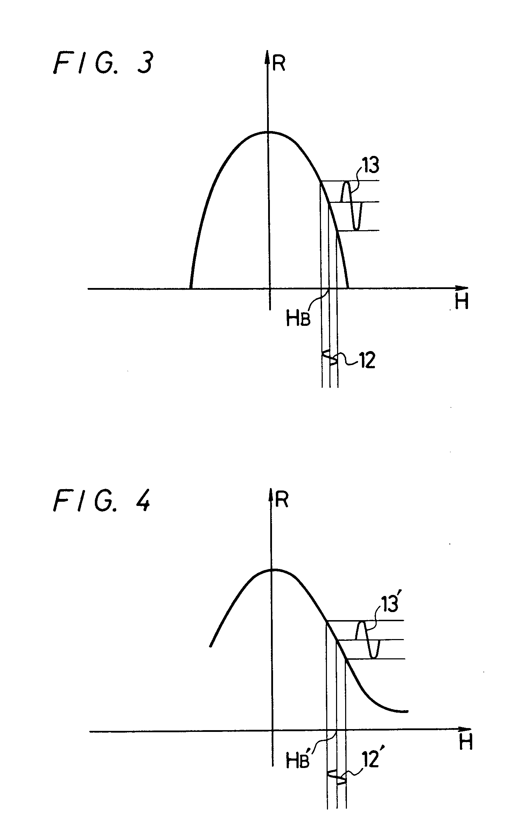

Such an MR effect type magnetic transducer head, in particular the rear type magnetic transducer head in which the magnetic material members are mounted close to the MR effect element, has a nonlinear MR characteristic. This is because, in a magnetic transducer head of this kind, the magnetic field (H) versus resistance (R) characteristic of the MR effect element 4 adopts the form of a parabola, as shown in Figure 3. Accordingly, if, as shown in Figure 3, a magnetic signal 12 is applied to the MR effect element 4 with a bias magnetic field $H_B$ applied to the MR effect element 4, the output signal 13 provided by the resistance change in the MR effect element 4 is asymmetrical and distorted. In this connection, the MR characteristic when the magnetic material members are not close to the MR effect element has an extended skirt portion as shown in Figure 4. Since the characteristic includes a portion having superior linearity, under a predetermined bias magnetic field $H_B'$, it is possible to derive from a magnetic signal 12' an output signal 13' which has no distortion and is of superior symmetry. This is due to the influence of a demagnetising field generated at both sides of the MR effect element 4. With the magnetic transducer head such as the rear type configuration head shown in Figures 1 and 2 in which the magnetic layers 6 and 7 are placed close to both side end faces of the MR effect element 4, the influence of such demagnetising field upon the MR characteristic is small.

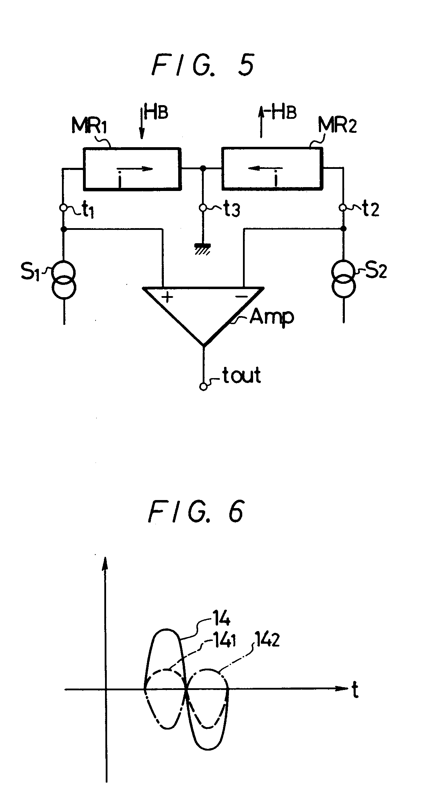

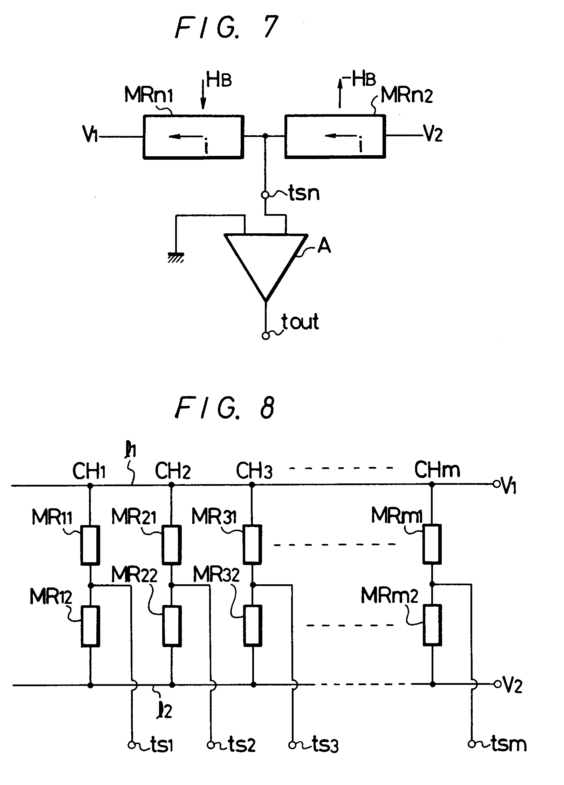

A magnetic transducer head utilising MR effect, which can remove the nonlinear component of the MR characteristic in the MR effect element, can be obtained by arranging the MR effect elements in a differential type configuration. As shown in Figure 5, the differential type MR magnetic transducer head comprises two MR effect elements $MR_1$ and $MR_2$ of which respective ends adjacent one another are connected to a common terminal $t_3$ and the other respective ends are led out to terminals $t_1$ and $t_2$. The terminals $t_1$ and $t_2$ are connected to respective independent constant current sources $S_1$ and $S_2$ and also are connected to input terminals of a differential amplifier Amp. The common terminal $t_3$ is supplied with a predetermined potential, for example ground potential. The MR effect elements $MR_1$ and $MR_2$ are respectively supplied with constant currents $i$ in directions opposite to one another, and also subjected to

EP 0 107 982 B1

bias magnetic fields $H_B$ which are in directions perpendicular to the constant currents i and opposite to one another. When the MR effect elements $MR_1$ and $MR_2$ are commonly supplied with an input magnetic flux signal from a magnetic recording medium, output signals $14_1$ and $14_2$ of opposite polarity, as shown in Figure 6, are derived from the MR effect elements $MR_1$ and $MR_2$ and supplied to the amplifier Amp so that, at an output terminal $t_{out}$ of the differential amplifier Amp, there appears a signal 14 having positive and negative symmetry provided by combining these signals. That is to say, the nonlinear components are cancelled out.

In the above-described differential type MR magnetic transducer head of constant current type, the nonlinear components of the MR characteristic of the MR effect elements $MR_1$ and $MR_2$ can be cancelled out. It is therefore possible to obtain a reproduced signal which is of excellent symmetry and contains no distortion. However, the magnetic transducer head of this kind requires three terminals $t_1$ to $t_3$ to be led out, two independent signal lines to be connected to the differential amplifier Amp, and two independent constant current sources $S_1$ and $S_2$. Therefore, if this magnetic transducer head is implemented in the form of a multichannel head, the number of channels being taken to be n (where n is a positive integer), the trasnducer head requires at least $2n+1$ terminals and at least $2n$ constant current sources. Moreover, because of the constant current driving technique, the multichannel magnetic transducer head consumes a large amount of power and the circuit thereof is large. Thus, the above-described differential type magnetic transducer head is not suitable for a multichannel magnetic transducer head where, for example, n is selected to be in a range of from 10 to 50.

To remove such defects, use can be made of a magnetic transducer head in which a pair of MR elements are coupled in series, a constant voltage is applied across the outer ends thereof and an output is differentially derived from the junction or connection point between the MR elements.

With a differential type magnetic transducer head employing such a constant voltage driving technique, it is possible to cancel out the second-order harmonic components in the same way as with the above-described constant current driving technique. The sensitivity under the same power consumption is reduced to half that of the constant current driving system. However, the signal-to-noise (S/N) ratio and signal power under the same power consumption are equal to those of the constant current driving system. Also, as compared with the differential type MR magnetic transducer head of the constant current type, it is not necessary to provide two independent constant current sources for each channel and to lead out a large number of terminals and their wiring. Thus, there is a great advantage in the case of a multichannel type magnetic transducer head that the configuration thereof can be simplified.

Such an MR magnetic transducer head of the constant voltage driving type can comprise an MR magnetic transducer head of the self-biasing type. An MR magnetic transducer head of the self-biasing type configuration is disclosed in published unexamined Japanese Patent Application No. 23920/1977 or can be a so-called "barber pole" type. In these magnetic transducer heads, the direction of the current path through each MR element is at a predetermined angle to the direction of easy magnetisation of each element so that the current flowing through the element allows a bias magnetic field having a predetermined angle to the current path to occur. In the MR magnetic transducer head of, for example, the barber pole type, with an inclination relative to the direction of easy magnetisiation along the longitudinal direction of the thin film MR element, namely just like the oblique patterns in a barber's pole, a plurality of good conductive band lines made of, for example, Au are placed in parallel with a predetermined spacing between them. In this case, if the MR element of a multichannel magnetic transducer head is reduced in size in order to reduce the width of the channel pitch, it is necessary to reduce the spacing between the conductor band lines. In association therewith, the substantial resistance of the MR element becomes small, resulting in various problems such as difficulties in handling the output signal.

Furthermore, in a thin film magnetic transducer head of this kind as shown in Figures 1 and 2, when part of a human body, for example a hand, touches the terminal of the magnetic transducer head or the magnetic layer or core 6 which faces the contact surface 11 with the magnetic recording medium, a discharge of static electricity accumulated in the human body or an induced voltage can destroy each of the insulating layers 3 or 5 between the MR element 4 and the bias conductor member 2, between the magnetic cores 6, 7 and the MR element 4, and further between the bias conductor member 2 and the magnetic cores 6, 7, and the breaking of wires is caused in each portion of the thin fim MR element and the like, thus producing defective products or trouble.

US Patent No. US-A-4 306 215 discloses a magnetic transducer head in which a pair of MR sensing elements are connected in series and bridge a gap between two magnetic cores. Magnetisation vectors of the MR elements are deflected by an external magnetic flux so that the resistance of one element increases while the resistance of the other element decreases. Reading out of the sensed signal is effected by means of a bridge circuit.

4

US-A-4 255 708 (corresponding to European Patent Application Publication No. EP-A-0 012 325) discloses a magnetic position transducer comprising two MR sensing elements connected in series. A voltage is applied across the pair of MR elements. Again, reading out of the sensed signal is effected by means of a bridge circuit.

Japanese Patent Application Publication No. JP-A-57 50 318 (an English abstract of which appears in PATENT ABSTRACTS OF JAPAN, Vol. 6, No. 125 (P-127)(1003), 10 July 1982) discloses a magnetic transducer head comprising series-connected MR elements and bias conductor portions formed on the MR elements to pass bias currents which flow in different directions.

According to the invention there is provided a magnetic transducer head utilising magnetoresistance effect, the transducer head comprising:

a plurality of series-connected pairs of magnetoresistance effect elements arranged to receive, in use, signal magnetic fields derived from a plurality of tracks on a magnetic recording medium, each pair of magnetoresistance effect elements comprising first and second magnetoresistance effect sensing elements arranged in a line;

means for applying a common first voltage to one end of every first sensing element and a common second voltage to one end of every second sensing element so that sensing current will flow through each of the first and second sensing elements, the middle of each pair of first and second sensing elements being connected or capable of being connected to a respective output circuit;

a closed-loop bias conductor provided for each of the pairs of magnetoresistance effect elements, each of the bias conductors having a first bias conductor portion and a second bias conductor portion arranged along the first and second sensing elements, one end of each of the first and second bias conductor portions being connected together at a connection point to form the closed-loop bias conductor and being connected to a middle point of the first and second bias conductor portions of a neighbouring closed-loop bias conductor; and

means for applying a bias current between the middle point of a first of the plurality of bias conductors and said connection point of a last of the plurality of bias conductors, thereby to apply a bias magnetic field of one direction to each of the first sensing elements and a bias magnetic field of a second direction to each of the second sensing elements.

Embodiments of the present invention described hereinbelow can provide a multichannel magnetic transducer head utilising MR effect which can remove or at least alleviate the above-described defects inherent in the conventional magnetic transducer head, and which can be of simplified configuration in that there need be only two current supply terminals common to all channels to thereby apply a predetermined bias magnetic field to each MR element of each channel.

The invention will now be further described, by way of illustrative and non-limiting example, with reference to the accompanying drawings, in which like references designate like elements and parts throughout, and in which:

Figure 1 is an enlarged plan view of a main part of a conventional magnetic transducer head utilising MR effect;

Figure 2 is a cross-sectional view of the transducer head of Figure 1 taken along a line A-A in Figure 1;

Figure 3 is a graph showing an MR characteristic of an MR effect element used in the magnetic transducer head shown in Figures 1 and 2;

Figure 4 is another graph of an MR characteristic;

Figure 5 shows an MR effect type magnetic transducer head of differential type which is driven by constant currents;

Figure 6 is a waveform diagram showing an output signal of the transducer head of Figure 5;

Figure 7 shows a fundamental structure that can be employed in magnetic transducer heads;

Figure 8 is an electrical connection diagram of a magnetic transducer head;

Figure 9 is a schematical constructional diagram of an example of MR effect elements that can be used in a magnetic transducer head;

Figure 10 is a constructional diagram of an example of bias conductor members that can be used in bias magnetic field generating means used in a magnetic transducer head embodying the present invention;

Figure 11 is a schematically enlarged plan view illustrating the structure that can be adopted for a main part of a magnetic transducer head embodying the present invention;

Figures 12 and 13 are enlarged cross-sectional views of the structure of Figure 11 taken along lines A-A and B-B, respectively, in Figure 11;

Figure 14 is a diagram showing an example of a pattern of bias magnetic field generating means for the MR effect element;

Figure 15 is a diagram showing a pattern of a magnetic transducer head having a bias correcting conductor which can cancel out self-biasing of the MR effect element;

Figure 16 is an enlarged cross-sectional view of a main part of the arrangement shown in Figure 15;

Figure 17 is a diagram showing a pattern of a magnetic transducer head having a conductor member protecting against discharge; and

Figure 18 is an enlarged cross-sectional view of a main part of the transducer head shown in Figure 17.

Figure 7 shows a fundamental structure that can be employed in magnetic transducer heads utilising MR effect. As shown in Figure 7, the transducer head comprises a pair of MR elements $MR_{n1}$ and $MR_{n2}$ connected in series for each channel. Constant voltages $V_1$ and $V_2$ are applied to the ends of the pair of MR elements $MR_{n1}$ and $MR_{n2}$. Also, the MR elements $MR_{n1}$ and $MR_{n2}$ have applied thereto bias magnetic fields $H_B$ and $-H_B$ which are each inclined at a predetermined angle (for example 90°) to each current i path therethrough, and are of the same magnitude as one another but of opposite polarity. Also, an output terminal $t_{sn}$ is led out from the junction or connection point between the series-connected MR elements $MR_{n1}$ and $MR_{n2}$ and connected to an amplifier A which derives an output signal on an output terminal $t_{out}$.

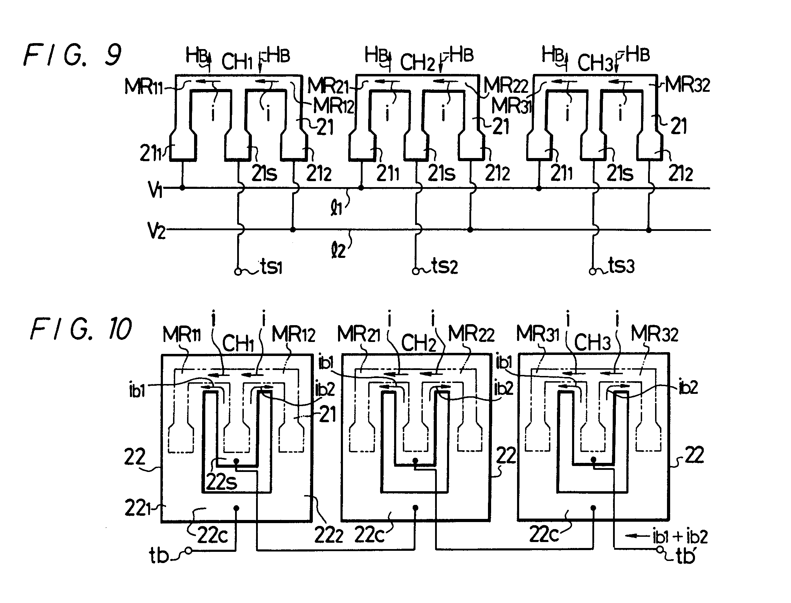

Figure 8 shows an example of the electrical connection pattern of a multichannel magnetic transducer head utilising MR effect. Each of the channels $CH_1$, $CH_2$, $CH_3$......$CH_m$ is provided with a pair of MR elements $MR_{n1}$ and $MR_{n2}$ ($MR_{11}$ and $MR_{12}$, $MR_{21}$ and $MR_{22}$, $MR_{31}$ and $MR_{32}$......$MR_{m1}$ and $MR_{m2}$) as shown in Figure 7. From the junction between each pair of MR elements a terminal $t_{sn}$ ($t_{s1}$, $t_{s2}$, $t_{s3}$......$t_{sm}$) is led out. The outer ends of the pairs of MR elements $MR_{n1}$ and $MR_{n2}$ in the respective channels $CH_n$ are connected in parallel to common power supply lines $l_1$ and $l_2$ to which the predetermined voltages $V_1$ and $V_2$ are applied.

As shown in Figure 9, each of the MR elements $MR_{n1}$ ($MR_{11}$, $MR_{21}$......$MR_{m1}$) and $MR_{n2}$ ($MR_{12}$, $MR_{22}$......$MR_{m2}$) is formed by a metal thin film 21 of E-shaped pattern having MR effect and made of, for example, an alloy containing Ni-Fe or Ni-Co. Outer leg portions $21_1$ and $21_2$ thereof are connected, respectively, to the lines $l_1$ and $l_2$ to which the voltages $V_1$ and $V_2$ are applied. From each central leg portion $21_s$ is led out the terminal $t_{sn}$ ($t_{s1}$, $t_{s2}$......$t_{sm}$) at which the output signal is developed. The MR elements $MR_{n1}$ and $MR_{n2}$ are formed between the leg portions $21_1$, $21_s$ and between the leg portions $21_s$ and $21_2$, respectively, of the metal thin film 21. Accordingly, since the MR elements $MR_{n1}$ and $MR_{n2}$ for each channel $CH_n$ are connected in series, the current flows therethrough in the same direction. The E-shape pattern thin film 21 is formed symmetrically of a centre-line which passes through the centre of the central leg portion $21_s$ so that both the MR elements $MR_{n1}$ and $MR_{n2}$ have the same magnetic characteristic.

Bias magnetic fields $H_B$ and $-H_B$ are applied to the MR elements $MR_{n1}$ and $MR_{n2}$ of each channel from the outside. The bias magnetic fields $H_B$ and $-H_B$ are each inclined at a predetermined angle not coincident with the current flow direction, for example in a direction perpendicular thereto, and are of opposite polarity. Means for applying the bias magnetic fields of opposite polarity to the pairs of the MR elements $MR_{n1}$ and $MR_{n2}$ may employ an electromagnetic induction system. As an example of this means, shown in Figure 10, a bias conductor member 22 is laminated along the MR thin film 21 which forms each pair of MR elements $MR_{n1}$ and $MR_{n2}$ with an insulating layer between them. Each bias conductor member 22 comprises a conductor layer having a low electrical resistance and is of an E-shaped pattern similar to that of the MR thin film 21 except for the presence of a coupling portion $22_c$ which connects the side leg portions $22_1$ and $22_2$ of its E-shaped pattern to one another. In the adjoining channels, the central leg portion $22_s$ of the E-shaped pattern, namely the portion corresponding to the junction between the pair of MR elements $MR_{n1}$ and $MR_{n2}$, is connected to the coupling portion $22_c$ connecting the side leg portions in the conductor 22 of the succeeding channel. A current source (not shown) which generates the bias magnetic field is connected between the coupling portion $22_c$ connecting the side leg portions in the E-shaped pattern of one channel $CH_1$ at one outermost position and the central leg portion $22_s$ of the channel $CH_m$ at the other outermost position. Each bias conductor member 22 extends parallel to the associated pair of MR elements $MR_{n1}$ and $MR_{n2}$, and the bias conductor members 22 of adjoining channels are electrically connected in series. Bias magnetic field generating current source terminals tb and tb' are led out from the ends of the series-connected bias conductor members 22. When a bias current $i_{b1}$ + $i_{b2}$ is caused to flow between the terminals tb and tb' from the current source which generates the bias magnetic field, the bias magnetic fields $H_B$ and $-H_B$ of opposite polarity are applied to each pair of MR elements $MR_{n1}$ and $MR_{n2}$.

Since each bias conductor member 22 extends parallel to the associated pair of MR elements $MR_{n1}$ and $MR_{n2}$ and the bias conductor members 22 are connected sequentially in series to the channels adjoining each other, only two terminals tb and tb' connected to the common power source are used as bias conductor terminals for all the channels and the configuration thereof is thus simplified.

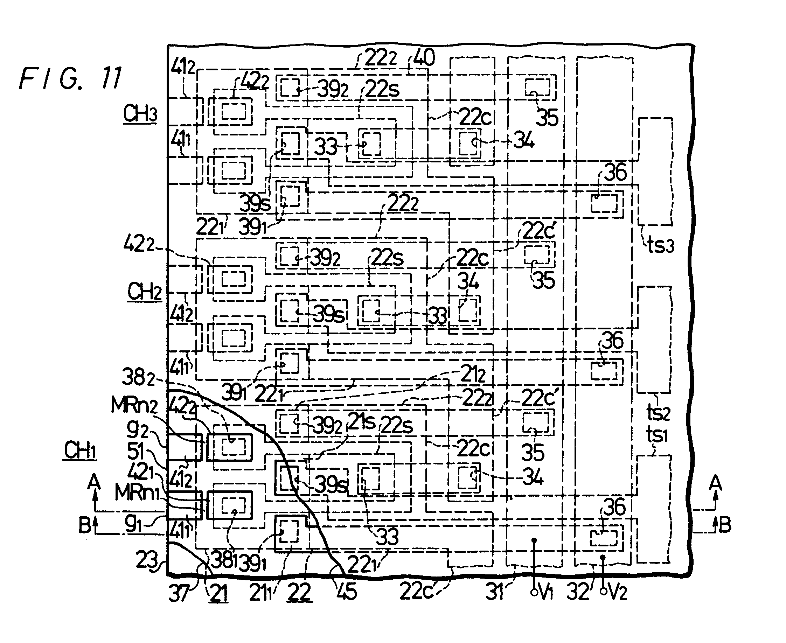

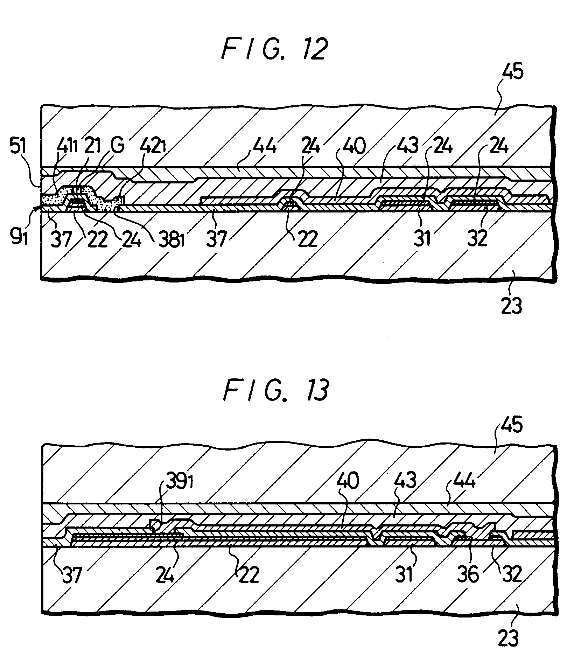

A form of implementation of the above multichannel MR type magnetic transducer head will now be described with reference to Figures 11 to 13. Figure 11 is a schematically enlarged plan view showing a main part of the multichannel MR type magnetic transducer head, Figure 12 is an enlarged cross-sectional view thereof taken along a line A-A in Figure 11 and Figure 13 is a like enlarged cross-sectional view thereof taken along a line B-B in Figure 11. The transducer head comprises a magnetic substrate 23 used as an under core and made, for example, from ferrite containing Ni-Zn. The bias conductor members 22 and conductor members 31 and 32 which act as the power supply lines $I_1$ and $I_2$ for applying the constant voltages $V_1$ and $V_2$ are deposited on the substrate 23. An MR thin film which is to form the pair of MR elements $MR_{n1}$ and $MR_{n2}$ ($MR_{11}$ and $MR_{12}$, $MR_{21}$ and $MR_{22}$,......$MR_{m1}$ and $MR_{m2}$) for each channel ($CH_1$, $CH_2$,......$CH_m$) is deposited thereon via an interposed insulating layer 24 with a predetermined pattern. Layers to form the bias conductor members 22, insulating layer 24 and the MR thin films 21 are deposited in turn on the magnetic substrate 23 over the whole area by vacuum evaporation, sputtering or the like and then put into their patterns. In order to increase the bonding strength of the conductor layer to the magnetic substrate 23, if necessary, a Cr layer, for example, acting as an under layer, is deposited thereon over the whole area to have a thickness of, for example, 3000 Angstroms (1Å = 0.1 nm), by vacuum evaporation, sputtering or the like. Conductive layers, for example Au metal layers, which are to form the bias conductor member 22 and the power supply conductor members 31 and 32, are similarly deposited thereon by vacuum evaporation, sputtering and the like and an $Si_3N_4$ or $Al_2O_3$ insulating layer 24 is deposited over the whole area thereof. Further, a metal thin film made of, for example, alloy containing Ni-Fe or Ni-Co for forming the MR thin films 21 is similarly deposited thereon over the whole area by vacuum evaporation, sputtering or the like. After that, through the MR thin film layer, the insulating layer provided thereunder, the conductive layer provided thereunder and the under layer provided thereunder, other portions than the MR thin films 21 of E-shaped pattern which form the pair of MR elements $MR_{n1}$ and $MR_{n2}$ for each channel, the similar bias conductor members 22, the power supply conductor members 31 and 32 for the constant voltages $V_1$ and $V_2$ and terminal portions are selectively etched away in turn with respect to each layer by using, for example, the same etching mask or using the upper layers as a mask. It is desirable that the etching be effected such that the etched portions are of trapezoidal shape in cross-section, the width thereof becoming lesser as it approaches the upper layer. Next, only the MR thin film layer is selectively etched thereby to form the aforementioned thin films 21 of E-shaped pattern. These etching processes can be carried out by a wet etching method or a dry etching method, for example a chemical etching method or an ion etching method or the like. Thus, each MR thin film 21 of E-shaped pattern which forms a pair of MR elements $MR_{n1}$ and $MR_{n2}$ is formed, and under this the associated bias conductor member 22 insulated by the insulating layer 24 and the power supply conductor members 31 and 32 are formed. In the same way as in Figure 10, each bias conductor member 22 comprises an extended portion $22_c{}'$ which is provided by extending the coupling portion $22_c$, which connects the outside leg portions $22_1$ and $22_2$, up to a position facing the central leg portion $22_s$ of each conductor member 22 in the adjoining channel, for example, the preceding channel $CH_{n-1}$ across the coupling portion $22_c$. Moreover, the power supply conductor members 31 and 32 can be formed as band-shaped patterns extending along the direction of the array of respective channels $CH_n$.

Next, contact windows 33 to 36, which are used to contact wiring conductor layers which will be described later, are bored through the insulating layers 24 on the end portions of the central leg portions $22_s$, the extended portions $22_c{}'$ of the bias conductor members 22 and portions of the power supply conductor members 31 and 32 corresponding to the channels $CH_n$.

Then, a non-magnetic insulating layer 37 made of, for example $SiO_2$ and having an etching characteristic different to that of the insulating layer 24 is deposited thereon over the whole area of these patterns by a well-known technique. The thickness of the insulating layer 37 is selected to be such (e.g. 0.3 microns) as to restrict the magnetic gap length in the contact surface with the magnetic recording medium, which will be described later. The insulating layer 37 is selectively etched by, for example, a wet etching method or a dry etching method such as plasma etching or the like to bore windows $38_1$ and $38_2$ at positions adjoining the pair of MR elements $MR_{n1}$ and $MR_{n2}$ between the leg portions of the E-shaped type MR thin film 21 for each channel, the surface of the magnetic substrate 23 thus being partially exposed. Moreover, windows $39_1$, $39_2$ and $39_s$ are bored through the end portions of the leg portions $21_1$, $21_2$ and $21_s$ on the MR thin films partially to the outside. Furthermore, at the same time as the windows $39_1$, $39_2$ and $39_s$ are bored, the insulating layers 37 coated on the previously bored windows 33 to 36 are etched away and the windows 33 to 36 are thereby exposed to the outside again.

Subsequently, a magnetic layer made of alloy containing Ni-Fe or the like is deposited thereon by vacuum evaporation, sputtering or the like over the whole area including not only the insides of the windows $38_1$ and $38_2$ but also positions transversing the pairs of MR elements $MR_{n1}$ and $MR_{n2}$. The above magnetic layer is selectively etched away by a wet etching method or a dry etching method in similar manner to that mentioned before so that, in association with each of the MR elements $MR_{n1}$ and $MR_{n2}$, a pair of magnetic

layers $41_1$, $41_2$ and $42_1$, $42_2$ are bridged across both side edges of the MR element through the insulating layer 37 so as to be disposed face to face with a predetermined spacing $\overline{G}$ between them. The width of each of the magnetic layers $41_1$, $41_2$ and $42_1$, $42_2$ which overlap the $\overline{side}$ edge of an MR element is selected, for example, to be approximately 1 $\mu$m when the width of the MR element is selected to be 5 $\mu$m. One pair of magnetic layers $42_1$ and $42_2$ partially contact the magnetic substrate 23 through the windows $38_1$ and $38_2$ bored through the insulating layers 37. On the other hand, except for the portions where the magnetic layers $41_1$, $41_2$ and $42_1$, $42_2$ on the magnetic substrate 23 exist, for example, the conductive layer 40 is deposited thoroughly over at least the windows 33 to 36 and $39_1$, $39_2$ and $39_s$ and is then selectively etched away to be removed, leaving wiring conductive portions between the windows $39_1$ and 36, the windows $39_2$ and 35 and the windows 33 and 34 and, further, a wiring portion used to lead the external output terminal $t_{2n}$ through the window $39_s$. Also, one terminal tb for connection to the bias source is led out from the extended portion $22_c{}'$ on the bias conductor member 22 in one outermost end channel $CH_1$, while the other terminal tb' for connection to the bias source is led out from the central leg portion $22_s$ of the other outermost end channel $CH_m$.

A protective layer 43 made of, for example, $SiO_2$ or the like, is deposited on the conductive layer over the whole area including these patterns, and an upper protective substrate 45, for example, glass plate or the like, is bonded to the layer 43 by an inorganic adhesive layer such as glass or an organic adhesive layer 44. Over the area from the protective substrate 45 to the magnetic substrate 23, the exposed outer ends of the magnetic layers $41_1$ and $41_2$ corresponding to the MR elements of the channels $CH_n$ are polished thereby to form a contact surface 51 for contact with the magnetic recording medium. As described above, magnetic gaps $g_1$, $g_2$ having a gap length restricted by the thickness of the non-magnetic insulating layer 37 are formed between the magnetic substrate 23 and the magnetic layers $41_1$, $41_2$ so as to face the contact surface 51 with the magnetic recording medium. According to the construction thus effected, the multichannel magnetic transducer head is such that a pair of closed magnetic paths or circuits, each including the magnetic gaps $g_1$, $g_2$ and the MR elements $MR_{n1}$, $MR_{n2}$, are respectively formed through the magnetic layers $41_1$, $42_1$ and the magnetic substrate 23 and through the magnetic layers $41_2$, $42_2$ and the magnetic substrate 23.

Multichannel MR type magnetic transducer heads embodying the present invention are not limited to the above examples. When the conductive layer comprising each bias conductor member 22 and the MR thin film layer comprising the MR thin films 21 are laminated to each other over the whole area through the insulating layer 24, which then are patterned, the MR thin film 21 of, for example, E-shaped pattern forming each MR element and the bias conductor member 22 are never displaced in position from each other. Also, since they are electrically insulated from each other by the insulating layer 24, the bias magnetic field can be applied to the MR elements $MR_{n1}$ and $MR_{n2}$ surely and efficiently. Moreover, since the insulating layers 24 are removed at the magnetic gap portions $g_1$ and $g_2$, the gap lengths of the magnetic gaps $g_1$ and $g_2$ are restricted only by the thickness of the upper insulating layers 37. Thus, it is possible to determine the gap length with ease. If both of the insulating layers 24 and 37 are made of, for example, $Al_2O_3$ or $Si_3N_4$ and $SiO_2$, each having different etching characteristics, there is an advantage that even when the upper insulating layer 37 made of $SiO_2$ is selectively etched by a plasma etching process, substantially no etching effect appears on the lower insulating layer 24 made of $Al_2O_3$ or $Si_3N_4$.

While in the above example a pair of MR elements are provided for each channel, it is possible to provide a plurality of pairs of MR elements for each channel. Even when the end face of the MR element faces the contact surface with the magnetic recording medium, the MR characteristic of each MR element similarly has a parabolic form, if the magnetic members are placed close to each other across the MR element. Thus, in the above example of embodiment of the present invention the MR magnetic transducer head is of the rear type. However the present invention can be applied also to MR magnetic transducer heads of the so-called shield type.

In the above example, the magnetic substrate 23 is an insulating substrate. If the magnetic substrate 23 is conductive, the substrate is coated with an insulating layer and the bias conductor member 22 and so on are formed thereon in turn.

As set forth above, since the bias magnetic field generated by causing current to flow through the bias conductor member 22 is applied to the MR elements $MR_{n1}$ and $MR_{n2}$ from the outside of the MR elements, the influence of the self-biassing effect of the current i flowing through the MR element itself causes the strength of the bias magnetic field being applied to the pair of MR elements $MR_{n1}$ and $MR_{n2}$ for each channel to be substantially non-uniform. As a result, the cancellation of the nonlinear components may sometimes be insufficient. Therefore, in view of the self-biasing effect, it is desirable that the bias magnetic fields from the outside be made different for the respective MR elements $MR_{n1}$ and $MR_{n2}$. By way of example, the bias currents $i_{b1}$ and $i_{b2}$ flowing along the respective MR elements $MR_{n1}$ and $MR_{n2}$ in the bias

conductor member 22 which generate the external bias magnetic field can be selected to have values that take the self-biasing influence of the MR elements $MR_{n1}$ and $MR_{n2}$ into account. Namely, as will be clear from Figure 10, the direction of the current i flowing through one MR element $MR_{n1}$ and that of the current $i_{b1}$ flowing through the path between the leg portions $22_s$ and $22_1$ of the bias conductor member 22 which applies the external bias magnetic field thereto are coincident with each other, while the direction of the current i flowing through the other MR element $MR_{n2}$ and that of the current $i_{b2}$ flowing through the path between the leg portions $22_s$ and $22_2$ of the bias conductor member 22 are opposite to each other. In other words, with regard to one MR element $MR_{n1}$, the direction of the self-biasing magnetic field and that of the bias magnetic field applied from the outside thereof are the same so that the strength of the bias magnetic field is increased by the self biasing, whereas, with regard to the other MR element $MR_{n2}$, the direction of the self-biasing magnetic field and that of the bias magnetic field applied from the outside thereof are opposite so that the strength of the bias magnetic field is decreased by the self bias. To be more specific, magnetic fields $H_1$ and $H_2$ which will substantially be applied to the MR elements $MR_{n1}$ and $MR_{n2}$, respectively, are given by the relationships

$$\left. \begin{array}{l} H_1 = H_{B1} + H_{MR1} \\ \\ H_2 = H_{B2} - H_{MR2} \end{array} \right\} \quad \dots\dots\dots\dots\dots\dots\dots\dots\dots\dots\dots\dots\dots\dots(1)$$

where $H_{B1}$ and $H_{B2}$ represent the strength of the external bias magnetic fields being applied to the respective MR elements $MR_{n1}$ and $MR_{n2}$ and $H_{MR1}$ and $H_{MR2}$ represent the strength of the self-biasing magnetic fields of the respective MR elements $MR_{n1}$ and $MR_{n2}$.

By the way, in practice, a contribution ratio A between the bias magnetic field substantially applied to the MR element and the magnitude of the magnetic field generated by the current $i_b$ flowing through the bias conductor member 22 is different from a contribution ratio B between the bias magnetic field actually effected on itself to the magnitude of the magnetic field generated by the current i flowing through the MR element itself. When the closed magnetic path formed by the under magnetic substrate 23 - the magnetic layer 41 ($41_1$ and $41_2$) - the MR element - the magnetic layer 42 ($42_1$ and $42_2$) is established, the bias conductor member 22 is formed under the MR element and the laminated portion of the bias conductor member 22 with the MR element is encircled by the above closed magnetic path, the contribution ratio A can be regarded as approximately equal to unity. On the other hand, since the MR element itself faces the outside through the spacing G between the magnetic layers 41 and 42 of the closed magnetic path, the contribution ratio B is made less than unity by virtue of the leakage magnetic flux therefrom. A practical measured result for B/A was approximately 1/2 to 4/5.

When the MR magnetic transducer head is formed as the differential type, the magnetic fields $H_1$ and $-H_2$ to be substantially applied to the MR elements $MR_{n1}$ and $MR_{n2}$ must satisfy the condition that $H_1 = H_2$. Thus, currents $iH_1$ and $iH_2$ for providing the magnetic fields $H_1$ and $H_2$ are given by the relationships

$$\left. \begin{array}{l} iH_1 = Aib_1 + Bi \\ \\ iH_2 = Aib_2 - Bi \end{array} \right\} \quad \dots\dots\dots\dots\dots\dots\dots\dots\dots\dots\dots\dots\dots(2)$$

Therefore, the currents $ib_1$ and $ib_2$ should be selected to satisfy the relationships

$$\left. \begin{array}{l} ib_1 = iH_1 - \dfrac{B}{A}i \\ \\ ib_2 = iH_2 + \dfrac{B}{A}i \end{array} \right\} \quad \dots\dots\dots\dots\dots\dots\dots\dots\dots\dots\dots\dots(3)$$

In order to obtain different values for the currents $ib_1$ and $ib_2$ flowing through paths $st_1$ and $st_2$ along the MR elements $MR_{n1}$ and $MR_{n2}$ between the leg portions $22_s$ and $22_1$, $22_2$ of the bias conductor member 22, on the basis of Equation (3) above, resistance values of resistors $R_1$ and $R_2$ of each of the paths $st_1$ and

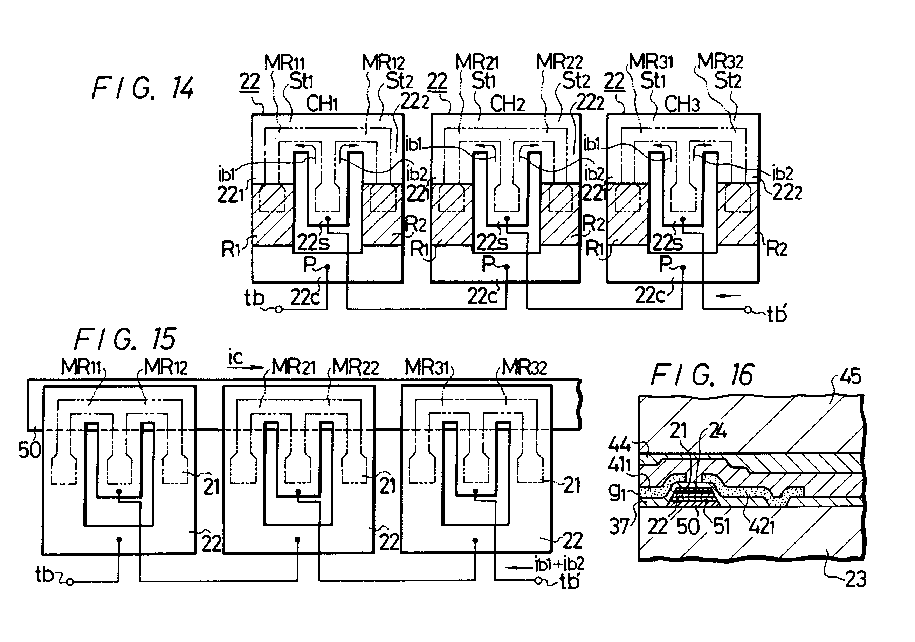

$st_2$ between the central portion $22_s$ and a power supply position P at the coupling portion $22_c$ must be selected to have predetermined values. As, for example, shown in Figure 14, the above predetermined values can be selected by interposing the resistors $R_1$ and $R_2$, each comprising a resistor layer and so on having a predetermined resistance value, in the leg portions $22_1$ and $22_2$. The values of the resistors $R_1$ and $R_2$ can be determined by selecting the specific resistance of the resistor layer, the thickness thereof, the width thereof and the like and further by changing each spacing between the power supply position P connected to the coupling portion $22_c$ and the leg portions $22_1$, $22_2$.

Moreover, in some cases, it is possible that the self-biasing magnetic fields of the MR elements $MR_{n1}$ and $MR_{n2}$ can be cancelled by other magnetic fields generated by supplying current to a bias correcting conductor member provided separately from the bias conductor member 22. An example of such an arrangement is shown in Figure 15. For each channel $CH_n$, in the extended direction of the MR elements $MR_{n1}$ and $MR_{n2}$, namely in the extended direction of the paths $st_1$ and $st_2$ in the bias conductor member 22, there is disposed a common bias correcting conductor member 50 through which a predetermined current ic of opposite polarity to that of the current i flowing through the MR element is caused to flow. As, for example, shown in Figure 16, the bias correcting conductor member 50 can be formed by locating a thin film conductor member beneath the bias conductor member 22 with the interposition of an insulating layer 51. As mentioned above, the magnetic field generated by applying current to the bias correcting conductor member 50 can cancel the self-biasing magnetic field in each MR element.

The means for removing the influence of the self-biasing magnetic field of the MR element is not limited in application to the mode for generating the bias magnetic field described above, namely to a so-called chain type configuration in which two terminals tb and tb' are provided and the biasing means are disposed parallel to the pair of MR elements $MR_{n1}$ and $MR_{n2}$ and electrically connected in series between the adjoining channels.

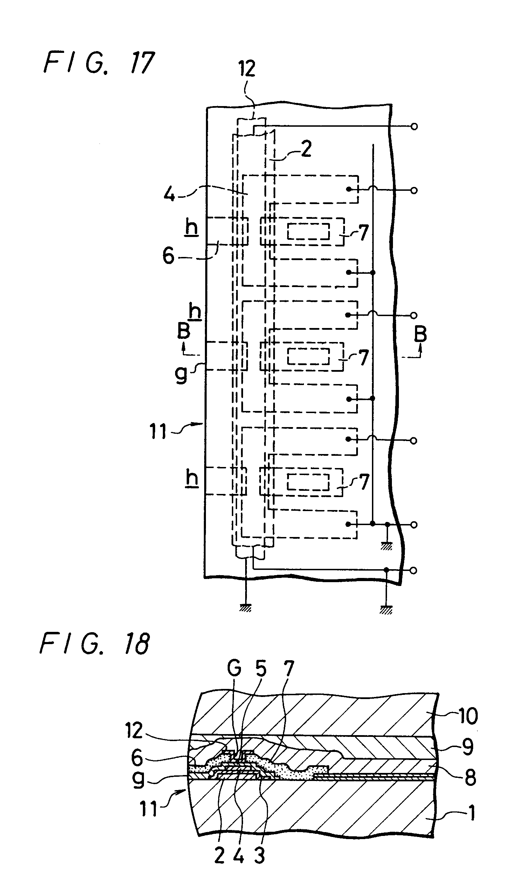

Figures 17 and 18 show another magnetic transducer head utilising MR effect embodying the present invention which is applied to a multichannel type MR magnetic transducer head. Figure 17 is a schematically enlarged plan view of a main part thereof and Figure 18 is an enlarged cross-sectional view thereof taken along a line B-B in Figure 17. In Figures 17 and 18, parts corresponding to like parts of Figures 1 and 2 are designated by the same references and will not be described again. In this embodiment, an electrical coupling member 12 in the form of a non-magnetic conductive layer is deposited on the discontinuous portion G except the magnetic gap g of, for example the closed magnetic path, namely, in the space between the magnetic cores 6 and 7 and in contact with the magnetic cores 6 and 7. Also, the coupling member 12, the magnetic cores 6 and 7, the MR element 4 and the bias conductor member 2 are substantially electrically connected together. By way of example, if one end of the bias conductor member 2 is selected to be at ground potential, one end of each MR element 4 is selected to be at ground potential, and also the coupling member 12, the electrically interconnected magnetic cores 6 and 7 thereby also are at ground potential, whereby they are all substantially electrically connected together. Furthermore, since the insulating layer 5 on each MR element 4 is quite thin, it is possible that, in order to prevent the coupling member 12 and the MR element 4 from being short-circuited on the discontinuous portion G, the coupling member 12 on the MR element 4 may be removed.

As set forth above, in the magnetic transducer head of the differential type configuration employing, for example, the constant voltage driving system in which bias magnetic fields of opposite polarity are applied to the MR element thereby to derive the output in a differential manner, the pattern of the bias conductor members 22 for generating the bias magnetic fields of opposite polarity is formed as a chain type pattern in which the patterns are formed in parallel with regard to the pair of MR elements $MR_{n1}$ and $MR_{n2}$ and are formed to be electrically connected in series between the adjoining channels. Therefore, since it is sufficient that only two power source terminals tb and tb' are led out for all the channels, the configuration thereof can be made simple, whereby the manufacturing process thereof accordingly becomes easy, and, further, the track pitch can be reduced, resulting in a great advantage for multi-channel magnetic transducer heads.

Moreover, since the strength of the bias magnetic fields being substantially applied to the MR elements $MR_{n1}$ and $MR_{n2}$ is made uniform, it is possible to obtain a magnetic characteristic having superior linearity.

Furthermore, with the above configuration, it is possible to avoid the possibility that, when the magnetic transducer head is touched by the human body or the like, static electricity supplied therefrom is discharged and destroys each of the insulating layers between the magnetic cores 6, 7, the MR element 4 and the bias conductor member 2. In consequence, it is possible to obtain an MR magnetic transducer head having high reliability.

**Claims**

1.  A magnetic transducer head utilising magnetoresistance effect, the transducer head comprising:
    a plurality of series-connected pairs of magnetoresistance effect elements ($MR_{11}$, $MR_{12}$; $MR_{21}$, $MR_{22}$; etc) arranged to receive, in use, signal magnetic fields derived from a plurality of tracks on a magnetic recording medium, each pair of magnetoresistance effect elements comprising first and second magnetoresistance effect sensing elements arranged in a line;
    means for applying a common first voltage ($V_1$) to one end of every first sensing element ($MR_{11}$; $MR_{21}$, etc) and a common second voltage ($V_2$) to one end of every second sensing element ($MR_{12}$; $MR_{22}$; etc) so that sensing current (i) will flow through each of the first and second sensing elements, the middle of each pair of first and second sensing elements being connected or capable of being connected to a respective output circuit;
    a closed-loop bias conductor (22) provided for each of the pairs of magnetoresistance effect elements, each of the bias conductors having a first bias conductor portion and a second bias conductor portion arranged along the first and second sensing elements, one end of each of the first and second bias conductor portions being connected together at a connection point ($22_c$) to form the closed-loop bias conductor and being connected to a middle point ($22_s$) of the first and second bias conductor portions of a neighbouring closed-loop bias conductor; and
    means for applying a bias current ($i_{b1}$ + $i_{b2}$) between the middle point ($22_s$) of a first of the plurality of bias conductors and said connection point ($22_c$) of a last of the plurality of bias conductors, thereby to apply a bias magnetic field (HB) of one direction to each of the first sensing elements and a bias magnetic field (-HB) of a second direction to each of the second sensing elements.

2.  A magnetic transducer head according to claim 1, comprising a bias compensation conductor (50) provided adjacent to the sensing elements and means for passing a current (ic) for generating a magnetic field of a third direction opposite to a direction of a magnetic field generated by said sensing current (i).

3.  A magnetic transducer head according to claim 1, comprising a first resistor ($R_1$) connected to the first bias conductor portion and a second resistor ($R_2$) connected to the second bias conductor portion.

## Revendications

1.  Tête à transducteur magnétique utilisant un effet magnétorésistif, la tête à transducteur comprenant :
    plusieurs paires d'éléments à effet magnétorésistif ($MR_{11}$, $MR_{12}$ ; $MR_{21}$, $MR_{22}$ ; etc.), connectés en série et disposés afin qu'ils reçoivent, pendant l'utilisation, des champs magnétiques de signaux, dérivés de plusieurs pistes formées sur un support d'enregistrement magnétique, chaque paire d'éléments à effet magnétorésistif comprenant un premier et un second élément capteur à effet magnétorésistif qui sont alignés,
    un dispositif destiné à appliquer une première tension commune ($V_1$) à une première extrémité de chaque premier élément capteur ($MR_{11}$ ; $MR_{21}$, etc.) et une seconde tension commune ($V_2$) à une première extrémité de chaque second élément capteur ($MR_{12}$ ; $MR_{22}$, etc.) afin qu'un courant de détection (i) circule dans chacun des premier et second éléments capteurs, le milieu de chaque paire d'un premier et d'un second élément capteur étant connecté ou pouvant être connecté à un circuit respectif de sortie,
    un conducteur (22) de polarisation en boucle fermée associé à chacune des paires d'éléments à effet magnétorésistif, chacun des conducteurs de polarisation ayant une première partie de conducteur de polarisation et une seconde partie de conducteur de polarisation disposées le long du premier et du second élément capteur, une première extrémité de chacune des première et seconde parties conductrices de polarisation étant connectée, à un point de connexion ($22_c$), afin que le conducteur de polarisation en boucle fermée soit formé, et étant connectée à un point médian ($22_s$) de la première et de la seconde partie conductrice de polarisation d'un conducteur de polarisation en boucle fermée voisin, et
    un dispositif destiné à appliquer un courant de polarisation ($i_{b1}$ + $i_{b2}$) entre le point médian ($22_s$) d'un premier des conducteurs de polarisation et le point de connexion ($22_c$) d'un dernier des conducteurs de polarisation, si bien qu'un champ magnétique de polarisation (HB) ayant une première direction est appliqué à chacun des premiers éléments capteurs et un champ magnétique de polarisation (- HB) ayant une seconde direction est appliqué à chacun des seconds éléments capteurs.

2.  Tête à transducteur magnétique selon la revendication 1, comprenant un conducteur (50) de compensation de polarisation placé près des éléments capteurs, et un dispositif destiné à transmettre un courant (ic) destiné à créer un champ magnétique ayant une troisième direction opposée à la direction d'un champ magnétique créé par le courant de détection (i).

**3.** Tête à transducteur magnétique selon la revendication 1, comprenant une première résistance ($R_1$) connectée à la première partie conductrice de polarisation et une seconde résistance ($R_2$) connectée à la seconde partie conductrice de polarisation.

**Patentansprüche**

**1.** Magnetischer, einen magnetischen Widerstandseffekt ausnutzender Wandlerkopf mit
mehreren in Reihe geschalteten Paaren magnetischer Widerstandseffektelemente ($MR_{11}$, $MR_{12}$; $MR_{21}$, $MR_{22}$; usw.), die so angeordnet sind, daß sie bei Benutzung signalmagnetische Felder empfangen, die von mehreren Spuren auf einem magnetischen Aufzeichnungsmedium abgeleitet sind, wobei jedes Paar magnetischer Widerstandseffektelemente ein erstes und zweites magnetisches Widerstandseffektabtastelement aufweist, die in einer Linie angeordnet sind,
einer Einrichtung zum Anlegen einer gemeinsamen ersten Spannung ($V_1$) an ein Ende jedes ersten Abtastelements ($MR_{11}$, $MR_{21}$, usw.) und einer gemeinsamen zweiten Spannung ($V_2$) an ein Ende jedes zweiten Abtastelements ($MR_{12}$; $MR_{22}$; usw.), so daß ein Abtaststrom (i) durch das erste und zweite Abtastelement fließt, wobei die Mitte jedes Paares aus erstem und zweitem Abtastelement mit einem jeweiligen Ausgangsschaltkreis verbunden oder verbindbar ist,
je einem geschlossenen Schleifenvorspannungsleiter (22) für jedes Paar magnetischer Widerstandseffektelemente, wobei jeder Vorspannungsleiter einen ersten Vorspannungsleiterabschnitt und einen zweiten Vorspannungsleiterabschnitt aufweist, die längs des ersten und zweiten Abtastelements angeordnet sind, wobei ein Ende des ersten und ein Ende des zweiten Vorspannungsleiterabschnitts an einem Verbindungspunkt ($22_c$) zur Bildung des geschlossenen Schleifenvorspannungsleiters miteinander und mit einem Mittelpunkt ($22_s$) des ersten und zweiten Vorspannungsleiterabschnitts eines benachbarten geschlossenen Schleifenvorspannungsleiters verbunden sind, und
einer Einrichtung zum Anlegen eines Vorspannungsstromes ($i_{b1}$ + $i_{b2}$) zwischen dem Mittelpunkt ($22_s$) eines ersten der mehreren Vorspannungsleiter und dem Verbindungspunkt ($22_c$) des letzten der mehreren Vorspannungsleiter, wobei ein Vormagnetisierungsfeld (HB) einer Richtung an jedes der ersten Abtastelemente und ein Vormagnetisierungsfeld (-HB) einer zweiten Richtung an jedes der zweiten Abtastelemente angelegt ist.

**2.** Magnetischer Wandlerkopf nach Anspruch 1, mit einem neben den Abtastelementen vorgesehenen Vorspannungskompensationsleiter (50) und einer Einrichtung zum Durchlassen eines Stromes (ic) zum Erzeugen eines magnetischen Feldes einer dritten Richtung entgegengesetzt zu einer Richtung eines durch den Abtaststrom (i) erzeugten magnetischen Feldes.

**3.** Magnetischer Wandlerkopf nach Anspruch 1, mit einem mit dem ersten Vorspannungsleiterabschnitt verbundenen ersten Widerstand ($R_1$) und einem mit dem zweiten Vorspannungsleiterabschnitt verbundenen zweiten Widerstand ($R_2$).

*F I G. 1*

*F I G. 2*

*F I G. 3*

*F I G. 4*

# FIG. 5

# FIG. 6

EP 0 107 982 B1

FIG. 7

MRn1  ↓HB          ↑HB  MRn2

V1 ——[ ← i ]———•———[ ← i ]—— V2

                tsn

            ▽ A

            tout

FIG. 8

      CH1    CH2    CH3  ------  CHm
                                      ○V1
MR11   MR21   MR31            MRm1

MR12  MR22  MR32             MRm2
                                      ○V2

        ts1    ts2    ts3          tsm

16

F / G. 9

F / G. 10

FIG. 11

## F I G. 12

## F I G. 13

F I G. 14

F I G. 15

F I G. 16

*F I G. 17*

*F I G. 18*